# EUROPEAN PATENT APPLICATION

(11) **EP 1 560 404 A2**
(43) Date of publication of application: **03.08.2005**
(21) Application number: 05001758.1
(22) Date of filing: 28.01.2005
(51) Int. Cl.: H04M 1/60

(54) **Vehicle data transmission system**

(30) Priority: 02.02.2004 JP 2004025217
(71) Applicant: MATSUSHITA ELECTRIC INDUSTRIAL CO., LTD., Kadoma-shi, Osaka 571-8501 (JP)
(72) Inventor: Yamaguchi, Katsuhiro, Osaka-shi Osaka 535-0031 (JP)
(74) Representative: Pautex Schneider, Nicole

(57) **Abstract**

Vehicle data input/output unit connected to all vehicle's voice input/output units via vehicle's communication line gives a data channel to each voice input/output unit, and the data input/output to the data channel input/output is given to a proper channel on the basis of the passenger position specifying unit of vehicle data input/output unit.

## Description

### FIELD OF THE INVENTION

The present invention relates to a vehicle data transmission system and, more particularly to a vehicle data transmission system which is preferable to be used as a connection network for a vehicle's hands-free system and vehicle's audio system.

### BACKGROUND OF THE INVENTION

In a hands-free system for vehicle using a conventional vehicle data transmission system, a portable telephone or a wireless apparatus of a specific passenger serves to input and output received voice signals to and from a wireless or wire unit by means of a specific voice signal input/output unit in the vehicle.

Such hands-free system establishes communication with a public network outside the vehicle through a single portable telephone of a specific passenger. And, proposed is a system by which a plurality of passengers in the vehicle may take part in the talk simultaneously by using the single portable telephone.

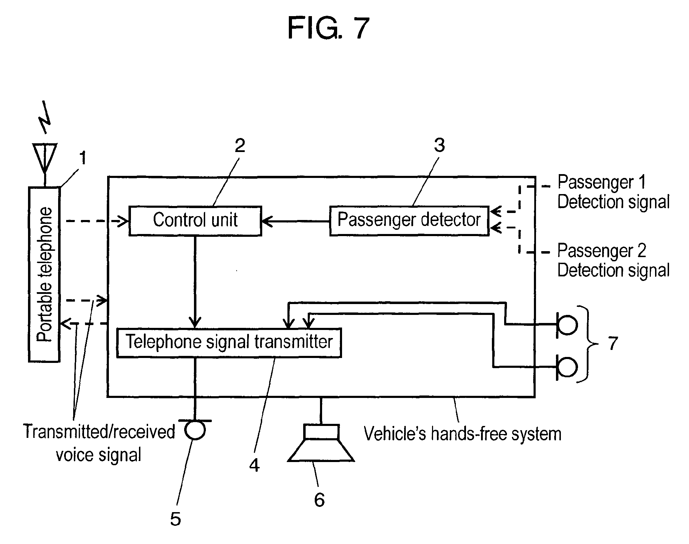

A conventional vehicle's hands-free system will be described in the following with reference to Fig. 7. Portable telephone 1 of a specific passenger inputs a control signal to control unit 2 in signal transmitting or receiving mode. Passenger detector 3 detects the existence of a passenger by means of a seat belt or a seat sensor in the vehicle, and inputs a control signal to control unit 2. Control unit 2 gives an instruction to synthesize the voice from mike unit 5 for driver with the voice from mike unit 7 for passenger by means of signal transmitter 4 in accordance with the control signal inputted. And, the synthesized voice is transmitted to portable telephone 1.

Speaker 6 outputs the voice from portable telephone 1. In this way, a plurality of passengers talk over a single portable telephone at the same time.

Known as a preceding technical document related to such a conventional example is, for example, Japanese Laid-open Patent 2002-164997.

However, in a hands-free system using a conventional vehicle data transmission system, only a single portable telephone of any one of passengers in the vehicle can be used. Accordingly, portable telephones of other individual passengers cannot be used. Particularly, when the passengers are enjoying music in the vehicle, it is difficult for those using no hands-free system to have a talk or detect received signals by using their portable telephones. Further, even with the output of music volume in the vehicle lowered during the talk, there will be a possibility of interfering with other passengers listening to music.

### SUMMARY OF THE INVENTION

In order to solve the above problem, the present invention is intended to provide a vehicle data transmission system wherein each of the passengers in the vehicle can use a hands-free system, and even in such situations as mentioned above, only the passenger receiving a signal is able to detect the received signal immediately without interfering with other passengers listening to music.

The vehicle data transmission system of the present invention comprises (i) a plurality of voice input units for inputting the voices of passengers in the vehicle, (ii) at least one A/D converter for converting the voice input from the voice input unit into digital signal, (iii) a plurality of voice output units, (iv) a vehicle data input/output unit, (v) a vehicle's communication line for connecting the A/D converter, plurality of voice output units, and vehicle data input/output unit in an annular fashion, wherein the vehicle's communication line has a plurality of channels. And, the vehicle data input/output unit comprises (a) at least one CPU, (b) at least one audio signal reproducing unit, (c) a passenger position specifying unit which specifies the passenger position in the vehicle, (d) an individual information input unit for inputting individual information including passenger's telephone numbers or alternative identification numbers, (e) a data input/output unit for outputting data to the vehicle's communication line and inputting data on the vehicle's communication line, (f) a memory for storing channel numbers of the plurality of channels, identifiers for identifying the input/output unit using the channel of the vehicle's communication line, the passenger position information, and the individual information in a predetermined fashion, (g) at least one wireless transmitter receiver for establishing communication with a public line by using telephone numbers or the alternative identification numbers, (h) a transmitted signal processor for processing signals transmitted by the wireless transmitter receiver, (i) a received signal processor for processing signals received by the wireless transmitter receiver, and (j) a data channel synthesizing and data extracting unit which produces a communication data frame comprising the plurality of channels and outputs the produced communication data frame to the data output unit. And, the data channel synthesizing and data extracting unit inputs the respective data signals outputted from the received signal processor, audio signal regenerator, and A/D converter to a specific channel according to the information in the memory. Also, the data channel synthesizing and data extracting unit outputs the signal obtained from a specific channel to the transmitted signal processor according to the information in the memory.

### BRIEF DESCRIPTION OF THE DRAWINGS

Fig. 1 is a vehicle data transmission system in the exemplary embodiment 1 of the present invention.
Fig. 2 is a block diagram of a vehicle data input/output unit in the exemplary embodiment.
Fig. 3A and Fig. 3B show the examples of data stored in a memory in the exemplary embodiment.
Fig. 4 shows a communication data frame of a vehicle's communication line in the exemplary embodiment.
Fig. 5 is a flow chart of individual passenger position information processing in the exemplary embodiment.
Fig. 6 is a flow chart of processing of received signal from a public network in the exemplary embodiment.
Fig. 7 shows a conventional hands-free system for vehicle.

### DETAILED DESCRIPTION OF THE EXEMPLARY EMBODIMENTS

### (Exemplary embodiment 1)

The exemplary embodiments of the present invention will be described in the following with reference to the drawings.

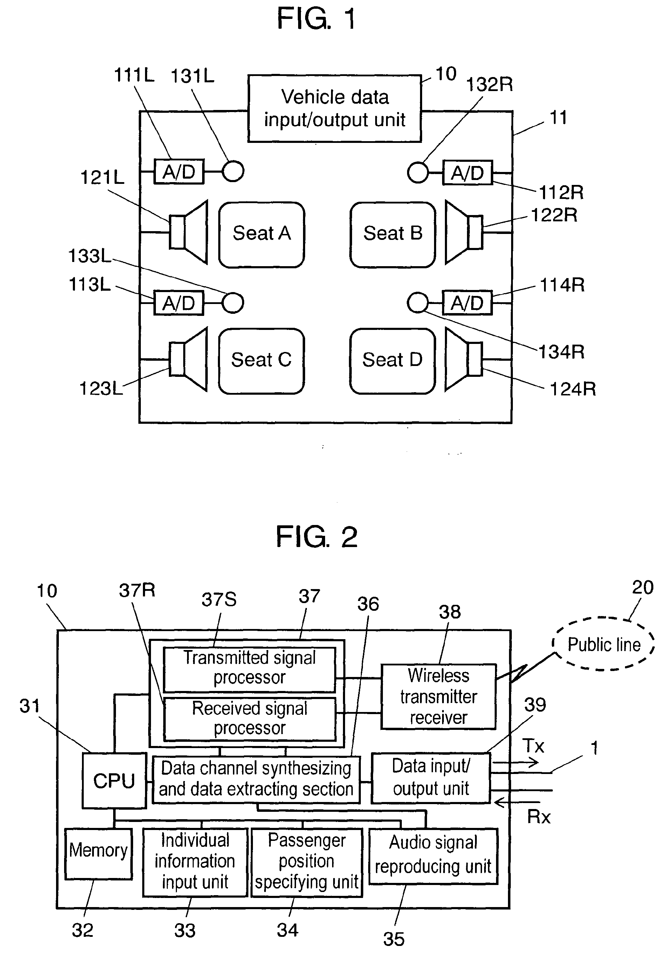

Fig. 1 shows an example of configuration of a vehicle data transmission system in the exemplary embodiment 1 of the present invention.

In Fig. 1, data output from vehicle data input/output unit 10 is inputted and outputted to vehicle data input/output unit 10 through vehicle's communication line 11 arranged in the vehicle in an annular fashion. The description of this exemplary embodiment will be given supposing that there exist seats A, B, C, D in the vehicle. As the voice input/output units in the vicinity of seat A, there are provided speaker 121L and microphone 131L. Microphone 131L via A/D converter 111L and speaker 121L are connected to vehicle's communication line 11. As for seats B to D, there are provided speaker 122R, 123L, 124R, microphone 132R, 133L, 134R, A/D converter 112R, 113L, and 114R, the same as for seat A.

Fig. 2 is a block diagram of vehicle data input/output unit 10.

Individual information input unit 33 is able to read individual information stored in memory such as IC card. In this exemplary embodiment, as individual information, individual portable telephone numbers or IP telephone numbers and individual voiceprint information are stored in the IC card. Passenger position specifying unit 34 specifies the position of a passenger relevant to the individual information with respect to seats A to D, and is provided with a voiceprint analyzer.

Also, wireless transmitter receiver 38 makes wireless connection with public line 20 to establish communication therewith. Wireless transmitter receiver 38 communicates with public line 20, using individual telephone numbers inputted to individual information input unit 33. Wireless transmitter receiver 38 has multi-antenna or array-antenna so that a plurality of passengers are able to use the apparatus at the same time.

Signal processor 37 processes radio signals transmitted and received to and from public line 20. Transmitted signal processor 37S of signal processor 37 packetizes the signals transmitted, and received signal processor 37R of signal processor 37 executes decoding for synthesizing the received packet data.

Data channel synthesizing and data extracting unit 36 outputs the data outputted from audio signal reproducing unit 35 such as CD and received signal processor 37R to data input/output unit 39 in accordance with the instruction of CPU31, producing a communication data frame according to the conditions stored in memory 32. Also, data channel synthesizing and data extracting unit 36 divides the communication data frame for the purpose of sending the data of a specific data channel to public line 20 included in the communication data frame received from line 11.

In the above description, individual information input unit 33 uses a memory medium reader such as IC card reader, but if there is provided wireless transmitter receiver 38 and the passenger has a wireless tag that stores individual information, it will be possible to input data without contact. Also, in case no voiceprint information is available, it is possible to dispose an input display device that may directly specify the passenger position to passenger position specifying unit 34.

In such a configuration as described above, an example of specific operation will be described in the following.

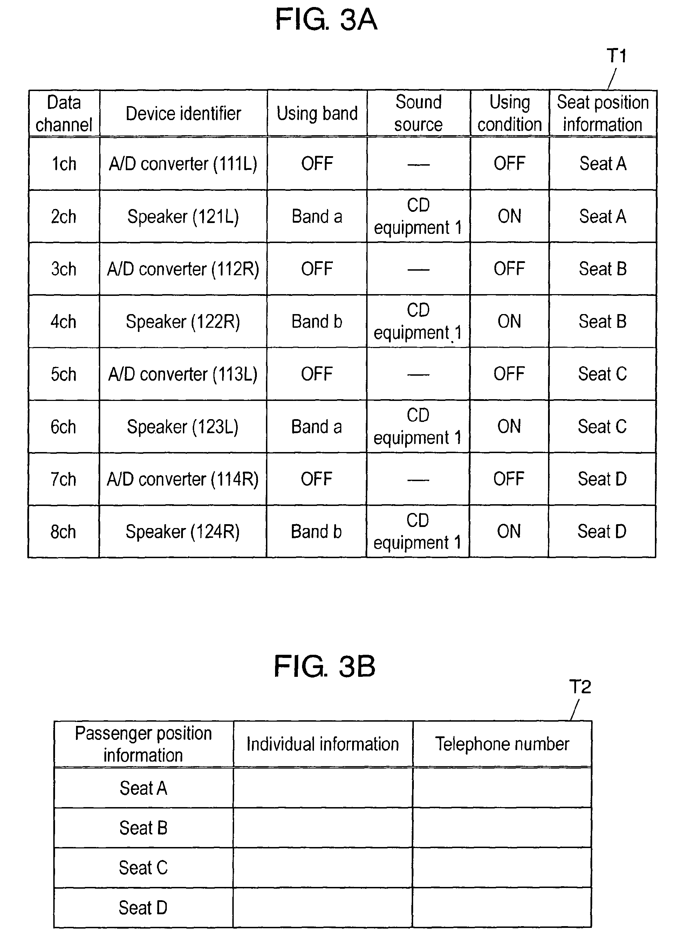

In Fig. 1 and Fig. 2, in a state that the passengers take the respective positions of seats A to D, suppose that music CD is regenerated by audio signal reproducing unit 35, and then the voice output is emitted from all speakers 121L, 122R, 123L and 124R in the vehicle. Fig. 3 shows an example of data then stored in memory 32.

Fig. 3A shows data channel table T1. Table T1, using data channels as key factors, includes device identifiers using the channels, bands used, sound sources, using conditions, and seat position information of the device in the vehicle with respect to equipment for which it is necessary to maintain or use data channels at the speakers or A/D converters in the vehicle.

Fig. 3B shows individual position information table T2. Individual position information table T2, using vehicle seats as key factors, includes individual information such as voiceprints and telephone numbers.

In the present invention, as shown in Fig. 3A, using CD equipment as sound source, the audio signal L channel of CD is outputted from the left speakers 121L, 123L of the vehicle, and the audio signal R channel of CD is outputted from the right speakers 122R, 124R of the vehicle. A/D converters 111L, 112R, 113L, 114R connected to microphones 131L, 132R, 133L, 134R are being OFF. On the other hand, as to individual position information table T2, only the passenger position information (seat information) as key value is being stored.

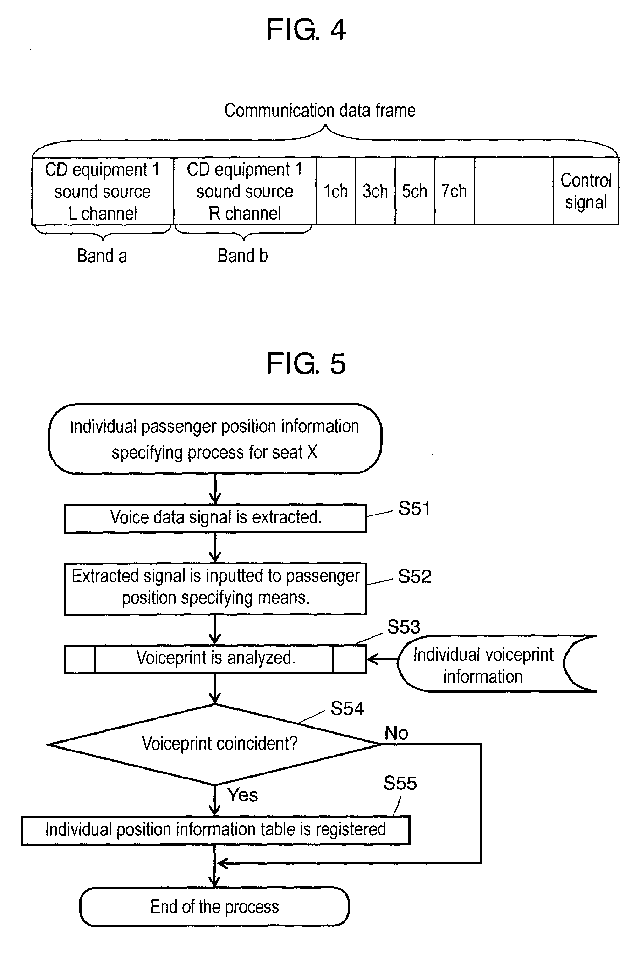

Fig. 4 is a block diagram of communication data frame that flows in vehicle's communication line 11 in the above example.

In Fig. 4, the audio signals (L, R channels) from CD equipment respectively maintain bands a, b, and data channels (1ch, 3ch, 5ch, 7ch) for A/D converters are maintained in advance as voice bands inputted from passengers. The respective speakers and A/D converters input and output the data signals from the channels assigned thereto.

The process for initial setting of individual position information table T2 will be described in the following by using Fig. 5.

Fig. 5 is a flow chart of processes for specifying individual position information of a certain seat. The process is described in the following with reference to Fig. 5.

First, the microphone (A/D converter) in the vicinity of the seat to be specified is turned ON, and the voice data signal of the passenger at the seat is extracted from the communication data frame (step S51). For example, in the case of processing at seat A, it is the 1ch signal inputted from A/D converter 111L.

Next, the signal is inputted to the voiceprint analyzer of passenger position specifying unit 34 (step S52).

The voiceprint analyzer compares the passenger's individual voiceprint information inputted from individual information input unit 33 with the extracted voice data signals in order (step S53).

As a result of the comparison, when there exist voiceprints coincident with each other, it is judged that the passenger having the relevant voiceprint information is positioned at the seat, and the individual information and telephone number of the relevant passenger are registered in individual position information table T2 in Fig. 3B in corresponding to the relevant seat(steps S54 to S55).

The above processes are executed for all the seats, and the telephone numbers of the passengers positioned at all seats are registered in individual position information table T2.

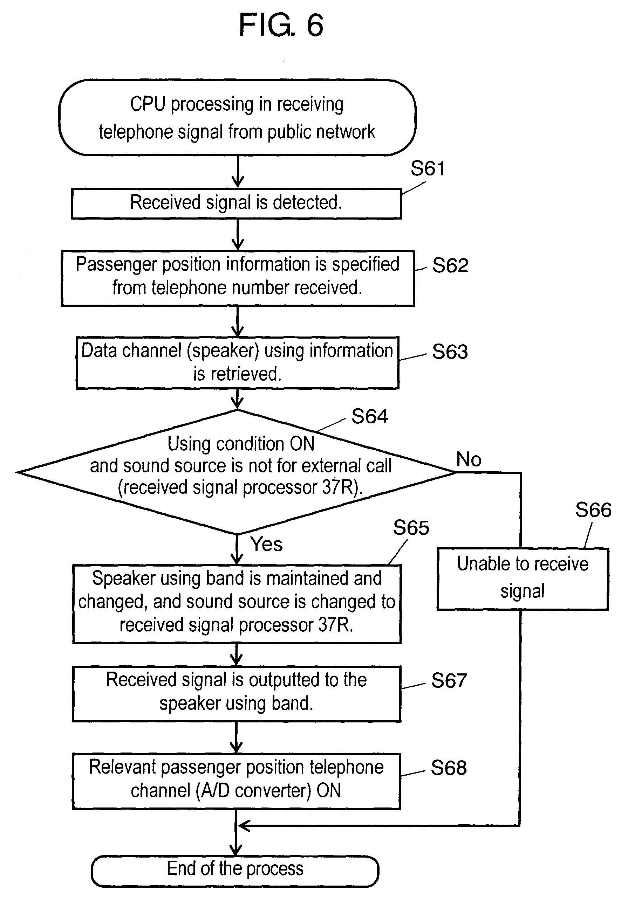

The operation of wireless transmitter receiver 38 in receiving signals with respect to the telephone numbers transmitted from public line 20 will be described in the following by using Fig. 6.

Fig. 6 is a flow chart of processes for receiving signals from public line 20 with respect to telephone numbers of passengers registered in individual position information table T2. The process is described in the following with reference to Fig. 6.

The signal from public line 20 is detected by CPU31 via wireless transmitter receiver 38 and received signal processor 37R (step S61).

CPU31 detecting the received signal specifies the seat position of the passenger with reference to individual position information table T2 by using the received telephone number as key factor (step S62), and specifies the speaker and the data channel from data channel table T1 by using the seat position as key factor (step S63).

Subsequently, the using condition of the specified data channel and sound source condition are recognized with reference to data channel table T1. When the sound source is for external talk (received signal processor 37R) and its using condition is ON, it is assumed to be already in a state of external talk, then the condition of being unable to receive or just receiving a signal is noticed by a certain means of display to end the process (steps S64, S66).

In other cases, data channel synthesizing and data extracting unit 36 is instructed so as to provide a speaker band. And, a control signal for changing using band of the speaker is transmitted in order to output the data signal in the band. The control signal is to be transmitted from the control signal channel of the communication data frame.

When the completion of changing the using band of the speaker has been confirmed, the sound source record of the data channel in data channel table T1 is changed to received signal processor 37R (step S65).

Thus, data channel synthesizing and data extracting unit 36 outputs the data output from received signal processor 37R. That is, data channel synthesizing and data extracting unit 36 is controlled by CPU31 so that the received signal of the passenger is outputted in the band for the speaker newly assigned (step S67).

When the above process has been completed, the music signal output from the speaker is turned OFF, and instead, the received signal is outputted.

In step S68, the speaker and A/D converter of the seat where the passenger is positioned for talk are turned ON, and data channel table T1 is set to the using band of the A/D converter and also the using condition record is set to ON. As a result, data channel synthesizing and data extracting unit 36 outputs the signal within the data band to transmitted signal processor 37S.

Through the above processes, it is possible for a passenger to have a hands-free talk by using the speaker and A/D converter in the vicinity of the passenger receiving the signal from public line 20 without giving influences to the data channels of other passengers.

In this exemplary embodiment, an example of use by a single passenger has been described, but it is also possible for a plurality of passengers in the vehicle to have a hands-free talk according to similar procedures by simultaneously using this system.

In the vehicle data transmission system of the present invention, all the voice input/output units in the vehicle are connected via vehicle's communication lines. Since a unit for inputting individual information including the telephone numbers of passengers in the vehicle and a unit for specifying the passenger positions are disposed in the vehicle data input/output unit, it is possible to allocate a voice input/output unit in the vicinity of the seat of each passenger.

Further, disposing a wireless transmitter receiver connected to public network and outputting received signals to appropriate data channels of the communication data frame that flows in the vehicle's communication line, it is possible for the passengers to be informed of the received signal and to have a talk over the system through the voice input unit allocated to each of the passengers.

Also, disposing a voice input unit and a voice output unit in the vicinity of each seat in the vehicle by at least one pair each, it is possible for each passenger in the vehicle to have a talk through the voice input/output unit.

Also, the individual information input unit reads the desired data by means of a wire or wireless unit out of the storage medium storing the intended individual information and transfers the data to the memory, and thereby, necessary information can be collected from the individual information storage medium carried by each passenger into the vehicle.

Also, the storing system of the memory is such that data channels are stored as key factors, and thus, the identifier of the device with the channel assigned thereto, the sound source information of the channel, the passenger position information, and the individual information can be exclusively specified with respect to each channel.

Also, when the wireless receiver receives a signal with respect to a telephone number transmitted from a public line, the vehicle data input/output unit executes the process for changing the sound source information of the data channel including the telephone number to the received signal processor, and thereby, it is possible for the passenger to be given notice of received signal and have a talk with respect to the voice input/output unit in the vicinity of the passenger having the telephone number received.

Also, since the passenger position specifying unit includes a voiceprint analyzer, in case individual voiceprint information is included in the storage medium storing individual information, the data signals of all channels assigned to the A/D converter and all the individual voiceprint information are compared in the voiceprint analyzer. By executing such comparison, it becomes possible to store the individual passenger position information and the individual information in the memory in automatically related fashion by using the voice of each passenger seated.

The vehicle data transmission system of the present invention allows a plurality of passengers in the vehicle to use the hands-free system at the same time and to control the input/output signals of the voice input/output unit for each passenger.

## Claims

1. A vehicle data transmission system, comprising:
a plurality of voice input units for inputting the voices of passengers in a vehicle;
at least one A/D converter for converting the voices inputted from the voice input unit into digital signals;
a plurality of voice output units;
a vehicle data input/output unit;
a vehicle's communication line for connecting the A/D converter, the plurality of voice output units, and a vehicle data input/output unit in an annular fashion, wherein the vehicle's communication line configures a plurality of channels,
wherein the vehicle data input/output unit comprises:
at least one CPU;
at least one audio signal reproducing unit;
a passenger position specifying unit for specifying passenger positions in the vehicle;
an individual information input unit for inputting individual information including passenger's telephone numbers or alternative identification numbers;
a data input/output unit for outputting data to the vehicle's communication line and inputting data on the vehicle's communication line;
a memory for storing channel numbers of the plurality of channels, identifiers for identifying the input/output unit using the channel of the vehicle's communication line, passenger position information, and the individual information in a predetermined fashion;
at least one wireless transmitter receiver for establishing communication with a public line by using telephone numbers or the alternative identification numbers;
a transmitted signal processor for processing signals transmitted by the wireless transmitter receiver;
a received signal processor for processing signals received by the wireless transmitter receiver; and
a data channel synthesizing and data extracting unit which produces a communication data frame configuring the plurality of channels and outputs the produced communication data frame to the data output unit,
wherein the data channel synthesizing and data extracting unit inputs the respective data signals outputted from the received signal processor, the audio signal regenerator, and the A/D converter to a specific channel according to the information in the memory, and
the data channel synthesizing and data extracting unit outputs the signal obtained from the specific channel to the transmitted signal processor according to the information in the memory.

2. The vehicle data transmission system of claim 1,
wherein at least one pair of the voice input unit and the voice output unit is disposed in the vicinity of each seat in the vehicle.

3. The vehicle data transmission system of claim 1,
wherein the individual information input unit reads a desired data out of the memory storing specific individual information by using a wire or wireless unit, and transfers the data to the memory.

4. The vehicle data transmission system of claim 1,
wherein the storing system of the memory is such that data channels are stored as key factors.

5. The vehicle data transmission system of claim 1,
wherein when the wireless receiver receives a signal with respect to a telephone number transmitted from the public line, the vehicle data input/output unit executes a process for changing the sound source of data channel including the telephone number to the received signal processor.

6. The vehicle data transmission system of claim 1,
wherein the passenger position specifying unit includes a voiceprint analyzer, and
when individual voiceprint information is included in the storage medium storing individual information, data signals of all data channels assigned to the A/D converter and all the individual voiceprint information are compared in the voiceprint analyzer, and thereby, when judged that they are coincident with each other in accordance with a predetermined standard, the individual information stored in the storage medium is stored in the memory as individual information in the relevant data channel.
